# EUROPÄISCHE PATENTSCHRIFT

(11) **EP 3 737 524 B1**
(45) Veröffentlichungstag und Bekanntmachung des Hinweises auf die Patenterteilung: **11.06.2025**
(21) Anmeldenummer: 19700569.7
(22) Anmeldetag: 09.01.2019
(51) Int. Cl.: B23H 1/04, B23H 1/06, C23C 8/10, C23C 8/40, C23C 8/80

(54) **VERFAHREN ZUR HERSTELLUNG EINER WERKZEUGELEKTRODE SOWIE WERKZEUGELEKTRODE**
METHOD FOR PRODUCING A TOOL ELECTRODE AND TOOL ELECTRODE
PROCÉDÉ DE FABRICATION D'UNE ÉLECTRODE-OUTIL ET ÉLECTRODE-OUTIL

(30) Priorität: 10.01.2018 DE 102018200308
(43) Veröffentlichungstag der Anmeldung: 18.11.2020
(73) Patentinhaber: Fraunhofer-Gesellschaft zur Förderung der angewandten Forschung e.V., 80686 München (DE)
(72) Erfinder: STRECKENBACH, Jan, 10587 Berlin (DE); WOLF, Cora-Sophia, 10587 Berlin (DE); BÖRNSTEIN, Julian, 10587 Berlin (DE); UHLMANN, Prof. Dr.-Ing. Eckart, 10587 Berlin (DE)
(74) Vertreter: Pfenning, Meinig & Partner mbB
(86) Internationale Anmeldenummer: PCT/EP2019/050463
(87) Internationale Veröffentlichungsnummer: WO 2019/137968

(56) Entgegenhaltungen:
- WO-A2-2012/097183
- CH-B1- 700 335
- JP-A- 2017 185 604
- US-A1- 2012 217 163
- US-A1- 2013 037 523

## Beschreibung

Die Erfindung liegt auf dem Gebiet des Maschinenbaus und ist mit besonderem Vorteil auf dem Gebiet des Formen- und Werkzeugbaus anwendbar. Die funkenerosive Bearbeitung, beispielsweise das funkenerosive Senken oder Schneiden sowie Schleifen sind Bearbeitungsmethoden, die im Formen- und Werkzeugbau, jedoch auch in anderen Anwendungsgebieten häufig verwendet werden, beispielsweise als Alternative oder in Ergänzung zum Fräsen oder Drehen. Die Bearbeitungsmethode der Funkenerosion ist im Gegensatz zu den genannten spanenden Verfahren im Wesentlichen unabhängig von den mechanischen Werkstoffeigenschaften des Werkstücks wie beispielsweise Festigkeit, Härte, Verschleißwiderstand oder Zähigkeit. Die Funkenerosion wird deshalb insbesondere zur Bearbeitung schwer zerspanbarer oder nichtzerspanbarer Werkstoffe, wie hochvergüteter Werkzeugstähle, Nickelbasislegierungen oder vergleichbar harter Werkstoffe eingesetzt. Grundsätzlich ist die Funkenerosion jedoch bei einer Vielzahl von elektrisch leitenden Werkstoffen anwendbar.

Grundsätzlich wird bei der Funkerosion in einem Dielektrikum der zu bearbeitende Werkstoff thermisch und ohne mechanische Einwirkung bei sehr geringen Prozesskräften abgetragen. Das Abtragverhalten wird dabei beispielsweise durch die Schmelztemperatur, die Verdampfungstemperatur, die Wärmeleitfähigkeit und die Wärmekapazität des zu bearbeitenden Werkstoffs sowie auch durch die Dichte und atomare Bindungsenergie des Werkstoffs bestimmt oder mitbestimmt.

Die Werkzeugelektrode stellt beim funkenerosiven Bearbeiten, insbesondere beim Senken oder Bohren, die Negativform der zu erzeugenden Ausnehmung dar, wobei die Form der Werkzeugelektrode in das Werkstück übertragen wird. Dabei bewegt sich die Werkzeugelektrode mit ihrer Frontfläche auf das Werkstück zu bzw. in das Werkstück hinein, wobei ein frontaler Arbeitsspalt in einem Sollwertbereich beispielsweise zwischen 3 Mikrometer und 50 Mikrometer zwischen der Fronfläche der Werkzeugelektrode und der Grundfläche der Ausnehmung des Werkstücks u.a. auf Basis der Zündverzögerungszeit geregelt wird. Die Vorschubgeschwindigkeit der Werkzeugelektrode richtet sich dabei nach dem Fortschritt des Abtragprozesses.

Die funkenerosive Bearbeitung kann in mehreren gröberen und feineren Bearbeitungsschritten (Schruppschritte, Schlichtschritte) erfolgen, um gewünschte Rauheitswerte und eine hohe Maß- und Formgenauigkeit der zu schaffenden Ausnehmung (beispielsweise kleiner 10 Mikrometer) zu erreichen. Bei der Bearbeitung können lokal Temperaturen im Bereich zwischen 4000°C und 20000°C erreicht werden.

Die während der Bearbeitung entstehenden Abtragpartikel im Bereich der Frontfläche der Werkzeugelektrode und der Grundfläche der Ausnehmung im Werkstück werden durch das strömende dielektrische Fluid, mit dem die Werkzeugelektrode und das Werkstück umgeben wird, über den sich ausbildenden Arbeitsspalt zwischen der Frontfläche der Werkzeugelektrode und der Grundfläche der Ausnehmung sowie die Seitenspalte zwischen den Mantelflächen der Werkzeugelektrode und den Seitenflächen der Ausnehmung im Werkstück abtransportiert. Aufgrund der elektrischen Leitfähigkeit der Abtragpartikel können sich zwischen der Werkzeugelektrode und dem Werkstück elektrische Brücken ausbilden, die zu Kurzschlüssen an unerwünschten Stellen führen. Zudem führt der physikalische Effekt der Influenz in den Spaltregionen mit Abtragpartikeln zu lokalen Veränderungen des elektrischen Feldes, so dass die Durchschlagfestigkeit des Dielektrikums nicht nur im Arbeitsspalt an der Frontseite der Werkzeugelektrode sondern auch an den Seitenspalten überschritten werden kann. Hieraus resultierende Entladungen führen zu Prozessinstabilitäten, erhöhtem Werkzeugverschleiß und der verstärkten Ausbildung einer weißen Randschicht am Werkstück, die durch den thermischen Abtragprozess entsteht und eigenspannungsbehaftet und rau ist, sowie Fremdpartikel der Werkzeugelektrode und Reaktionsprodukte des Dielektrikums enthalten kann.

Mit zunehmender Bearbeitungstiefe, also Vorschubtiefe der Werkzeugelektrode, nimmt die Häufigkeit der genannten Sekundärentladungen im Bereich der Seitenspalte zu. Dies führt beispielsweise auch zu einer Begrenzung des Aspektverhältnisses der einzubringenden Ausnehmungen im Werkstück (Verhältnis von Tiefe der Ausnehmung zu ihrer Breite).

Der vorliegenden Erfindung liegt vor dem Hintergrund des Standes der Technik die Aufgabe zugrunde, eine Werkzeugelektrode zu schaffen, die eine formgenaue Bearbeitung bei der Funkenerosion erlaubt, wobei Entladungen und die Ausbildung elektrischer Brücken im Bereich der Seitenspalte zwischen der Mantelfläche der Elektrode und den Seitenflächen einer zu schaffenden Ausnehmung im Werkstück minimiert werden sollen.

Die Aufgabe wird mit den Merkmalen der Erfindung gemäß Patentanspruch 1 durch ein Verfahren zur Herstellung einer Werkzeugelektrode gelöst. Die Patentansprüche 2 bis 6 stellen Ausgestaltungen des Herstellungsverfahrens vor. Zudem bezieht sich die Erfindung auf eine Werkzeugelektrode nach dem Patentanspruch 7.

Demgemäß bezieht sich die Erfindung auf ein Verfahren zur Herstellung einer Werkzeugelektrode für die funkenerosive Senkbearbeitung eines Werkstücks mit dem Ziel der Erzeugung einer Ausnehmung/Senkung in dem Werkstück, welche eine Grundfläche und Seitenflächen aufweist, wobei die Werkzeugelektrode eine Frontfläche aufweist, die der zu erodierenden Fläche oder der Grundfläche des Werkstücks zugewandt ist sowie eine oder mehrere Mantelflächen, die während des Senkungsprozesses den Seitenflächen der im Werkstück erodierten Ausnehmung/Senkung zugewandt sind.

Dabei ist zudem vorgesehen, dass eine oder mehrere Mantelflächen der Werkzeugelektrode wenigstens teilweise mit einer Substanz in Kontakt gebracht werden, die mit dem Material der Werkzeugelektrode unter Ausbildung einer elektrisch isolierenden Reaktionsschicht, insbesondere eines Oxids, eines Nitrids oder Phosphats reagiert.

Aus dem Stand der Technik ist bereits bekannt, Werkzeugelektroden für die funkenerosive Bearbeitung im Bereich ihrer Mantelflächen zu beschichten. Dadurch werden die Elektrodenmantelflächen isoliert, um Entladungen in den Seitenspalten zu vermeiden. Beispielsweise sind hierzu Beschichtungen mit Keramiken auf Siliziumbasis oder mit reinem Silizium bekannt. Der Nachteil bei der Verwendung derartiger Schichten besteht darin, dass sich die aufgebrachten Schichten teilweise ablösen und ausbrechen. Zudem kann während des Erosionsprozesses die Beschichtung abbrennen, wobei das Abbrennen über die Mantelfläche der Werkzeugelektrode hinweg teilweise ungleichmäßig geschieht, so dass die Maßhaltigkeit des Erosionsprozesses infrage gestellt ist.

Es ist zudem bekannt, die Mantelflächen von Werkzeugelektroden mit Polymeren zu beschichten. Auch die Verwendung von Kompositwerkstoffen als Beschichtungswerkstoff ist bekannt, wobei diese (beispielsweise Kupferzirkondiborit) beispielsweise galvanisch aufgebracht werden können.

Bei allen bekannten Beschichtungen besteht das Problem einerseits in der Stabilität der Beschichtung und andererseits in der Maßhaltigkeit, da die zusätzlichen Schichten zunächst aufgebaut werden und während des Erosionsprozesses die Beschichtungen teilweise abgetragen werden.

Zudem werden im Erosionsprozess Partikel bzw. Atome der Beschichtung in das Werkstück eingebracht. Dies kann insbesondere bei Werkstücken der Medizintechnik sehr unerwünscht sein. Haften derartige Partikel/Atome an der Oberfläche des Werkstücks, so können sie die Materialeigenschaften des Werkstücks nachhaltig ändern.

Aus dem US-Patent 4 341 939 ist beispielsweise eine Drahtelektrode mit einer metallischen Beschichtung (Zink) bekannt.

Das Patent US 4 977 303 offenbart ebenfalls eine mit Zink beschichtete Drahtelektrode.

Aus der internationalen Patentanmeldung WO 2012/097183 A2 sind ein Verfahren zur Herstellung einer Werkzeugelektrode und eine Werkzeugelektrode gemäß den Obergriffen der Ansprüche 1 und 7 bekannt.

Durch die vorliegende Erfindung wird im Gegensatz zum Stand der Technik auf die Oberfläche der Werkzeugelektrode keine zusätzliche Fremdschicht aufgebracht, sondern durch Reaktion des Materials der Werkzeugelektrode mit einem geeigneten Reaktionspartner ein Teil des Materials der Werkzeugelektrode im Bereich ihrer Oberfläche durch eine chemische Reaktion umgewandelt. Hierdurch findet annähernd keine Volumenänderung oder Formänderung der Werkzeugelektrode statt, so dass eine ausgezeichnete Maßhaltigkeit erreicht wird. Zudem ist ein optimaler Verbund des Materials der Werkzeugelektrode mit dem Reaktionsprodukt an ihrer Oberfläche gewährleistet.

Ein weiterer Vorteil des erfindungsgemäßen Herstellungsverfahrens liegt darin, dass außer dem Reaktionspartner, beispielsweise dem Oxidans, keine weiteren Stoffe an der Werkzeugelektrode angelagert werden, wodurch die Anlagerung unerwünschter Fremdpartikel während des Erosionsprozesses an einem Werkstück minimiert wird.

Eine Ausgestaltung des erfindungsgemäßen Verfahrens kann vorsehen, dass die Reaktion bei Ausbildung einer Schichtdicke von weniger als 15 Mikrometer, insbesondere weniger als 10 Mikrometer, weiter insbesondere weniger als 5 Mikrometer, weiter insbesondere weniger als 1 Mikrometer abgebrochen wird, wobei insbesondere Hinterschneidungen und Ausnehmungen an der/den Mantelflächen mit der Substanz in Kontakt gebracht werden, so dass alle Bereiche der Mantelflächen eine gleichmäßige elektrisch isolierende Reaktionsschicht ausbilden.

Die Werkzeugelektrode kann bis zur Frontfläche und auch einschließlich der Frontfläche mit einer Substanz zur Erzeugung einer Reaktionsschicht in Kontakt gebracht werden. Dabei kann die Werkzeugelektrode vor der Ausbildung der Reaktionsschicht eine zurückspringende Kontur im Bereich der Mantelfläche(n) aufweisen. Diese zurückspringende Kontur ist insbesondere vollständig an der Elektrode umlaufend ausgebildet und kann abgerundete Kanten aufweisen.

Vorteilhaft kann der Reaktionsschritt zur Erzeugung der Reaktionsschicht so gestaltet sein, dass ein Materialaufbau auf der/den Mantelfläche(n) erzeugt wird, der den rückspringenden Bereich der Kontur der Elektrode auf die Maße der Frontfläche bringt.

Ein Vorteil des hier vorgestellten Verfahrens liegt gegenüber der Beschichtung mit einem Fremdmaterial insbesondere darin, dass bei den bekannten Beschichtungsprozessen oft einzelne Bereiche der Mantelfläche(n) der Werkzeugelektrode unbeschichtet bleiben oder eine zu geringe Beschichtungsdicke ausbilden, wie beispielsweise Hinterschneidungen oder Ausnehmungen. Bei dem erfindungsgemäßen Verfahren kann die Werkzeugelektrode beispielsweise mit einem Reaktionspartner in Form eines Fluids, d.h. eines Gases oder einer Flüssigkeit, umspült werden, um die Reaktion an der Oberfläche der Werkzeugelektrode hervorzurufen oder zu fördern, wobei sichergestellt werden kann, dass alle Bereiche der Mantelfläche der Werkzeugelektrode gleichmäßig mit dem Reaktionspartner in Kontakt gebracht werden.

Eine weitere Ausführungsform der Erfindung kann vorsehen, dass während des Kontaktes der Mantelfläche(n) mit der Substanz zur Reaktionsschichtbildung eine Temperatursteuerung, insbesondere eine Temperaturerhöhung stattfindet.

Beispiele hierfür werden weiter unten im Rahmen der Figurenbeschreibung angeführt.

Hierbei ist vorgesehen, dass die Substanz , mit der die Mantelfläche(n) in Kontakt gebracht wird/werden, mit dem Material der Werkzeugelektrode eine chemische Reaktion eingeht, bei der mit dem Material der Werkzeugelektrode eine elektrisch isolierende Reaktionsschicht gebildet wird.

In dem erfindungsgemäßen Verfahren ist vorgesehen,dass eine Werkzeugelektrode aus Messing mit Salzwasser oder einer Lösung von NaCl in Essig, einer Lösung von Natron in destilliertem Wasser, einer Mischung von Schwefelleber und destilliertem Wasser, einer Lösung von Kupfercarbonat in Ammoniakwasser oder Ammoniakdampf in Kontakt gebracht wird.

Hier kann insbesondere auch vorgesehen sein, dass der Kontakt wenigstens zeitweise bei einer Temperatur oberhalb von 100 Grad Celsius, insbesondere oberhalb von 120 Grad Celsius stattfindet.

Wie oben erwähnt, kann auch im Anschluss an das hier beschriebene Verfahren der Reaktionsschichtbildung, insbesondere der Oxidation, mittels eines flüssigen Reaktionspartners nach der Reaktion und einer Abkühlung die Werkzeugelektrode zum Abbau von Schichtdefekten erneut erwärmt werden.

Die Erfindung bezieht sich außer auf ein Verfahren zur Herstellung einer Werkzeugelektrode der oben erläuterten Art auch auf eine Werkzeugelektrode zum funkenerosiven Senken eines Werkstücks mit dem Ziel der Erzeugung einer Ausnehmung an dem Werkstück, welche eine Grundfläche und Seitenflächen aufweist, wobei die Werkzeugelektrode eine Frontfläche aufweist, die der zu erodierenden Fläche oder der Grundfläche des Werkstücks zugewandt ist und eine oder mehrere Mantelflächen, die während des Senkungsprozesses den Seitenflächen der im Werkstück erodierten Ausnehmung/Senkung zugewandt sind.

Hierbei ist vorgesehen, dass eine oder mehrere Mantelflächen der Werkzeugelektrode an ihrer Oberfläche eine Schicht aufweist/aufweisen, die durch Umsetzung des Materials der Werkzeugelektrode mit einem Reaktionspartner gebildet ist und die gegenüber dem Material der Werkzeugelektrode einen höheren elektrischen Widerstand aufweist.

Die Erfindung wird nachfolgend anhand von Figuren einer Zeichnung gezeigt und anschließend erläutert.

Dabei zeigt
- Fig. 1: schematisch die Bearbeitung eines Werkstücks mittels einer Werkzeugelektrode durch Funkenerosion,
- Fig. 2: die Detaildarstellung des Abtragungsprozesses gemäß dem Stand der Technik,
- Fig. 3: die Details des Abtragungsvorgangs bei der Funkenerosion mit einer Werkzeugelektrode gemäß der Erfindung,
- Fig. 4: die Ausbildung einer Beschichtung bei einer Werkzeugelektrode gemäß dem Stand der Technik,
- Fig. 5: die Ausbildung einer Oxidschicht/Reaktionsschicht an einer Werkzeugelektrode gemäß der Erfindung,
- Fig. 6: ein Verfahren zur Verwendung einer Werkzeugelektrode in einer Bearbeitungsmaschine mit einem Handlingsystem,
- Fign. 7 und 8: besondere Ausbildungen der Reaktionsschicht.

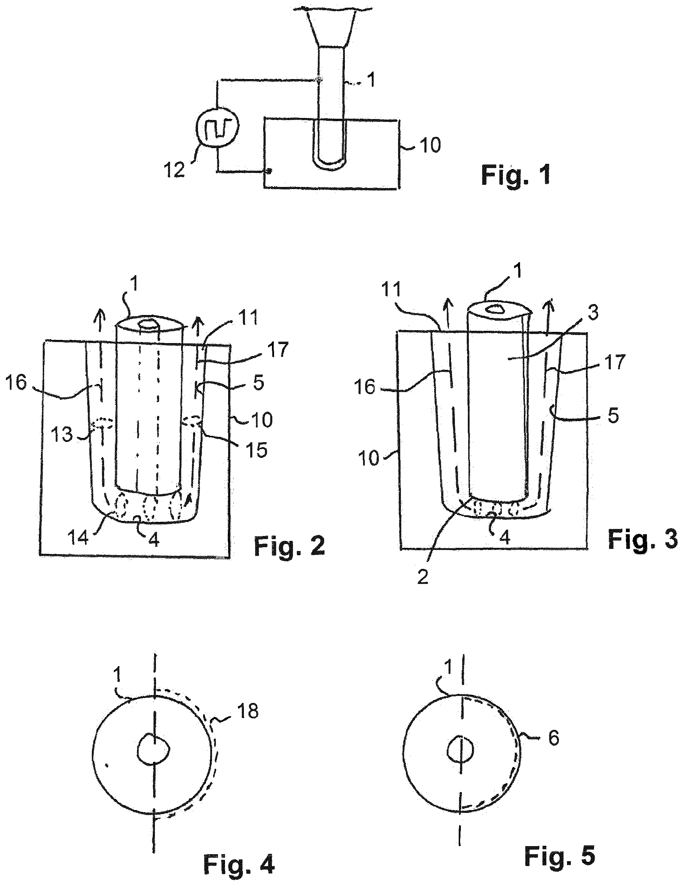

Die Fig. 1 zeigt schematisch eine Werkzeugelektrode 1 zur Funkenerosion für ein Verfahren zum funkenerosiven Senken. Mittels eines solchen Verfahrens kann eine Ausnehmung in ein Werkstück 10 eingebracht werden, indem zwischen der Werkzeugelektrode 1 und dem Werkstück 10 mittels einer Spannungsversorgung 12 in einem dielektrischen Fluid eine bestimmte Entladespannung und ein Entladestrom eingestellt werden.

In der Fig. 2 ist dargestellt, dass die Werkzeugelektrode 1 gemäß dem Stand der Technik in die Ausnehmung 11, die in das Werkstück 10 eingebracht werden soll, schrittweise eingesenkt wird, um an der Grundfläche 4 der Ausnehmung 11 durch Erosion die Materialabtragung stattfinden zu lassen. Die entsprechenden Entladungen sind durch gestrichelte Ovale 13, 14, 15 dargestellt. In der Fig. 2 sind dabei Entladungen 13, 15 im Bereich der Seitenflächen 5 der Ausnehmung 11 dargestellt, die sich gemäß dem Stand der Technik schwer vermeiden lassen. Das in den Seitenspalten zwischen den Seitenflächen 5 und der Werkzeugelektrode 1 ausströmende Dielektrikum nimmt die Abtragpartikel des Werkstücks 10 mit, so dass sich im Bereich der Seitenspalte leicht elektrische Brücken ausbilden, die zu Überschlägen führen können. Auch das Auftragen einer isolierenden Schicht im Bereich der Mantelfläche(n) der Elektrode löst die Probleme nur unzureichend, da einerseits Probleme mit der Maßhaltigkeit der Werkzeugelektrode mit einer solchen Schicht bestehen und andererseits unerwünschte Fremdpartikel herausgelöst werden oder sogar Teile der Beschichtung abplatzen.

In der Fig. 3 zeigt die Situation beim Funkenerodieren mit einer Werkzeugelektrode 1, die an der Mantelfläche 3 eine isolierende Schicht, insbesondere eine Oxidschicht, trägt, die durch Reaktion mit einem geeigneten Reaktionspartner an der Oberfläche der Werkzeugelektrode 1 gebildet ist. Die Funkenerosion findet im Bereich der Frontfläche 2 zwischen dieser und der Grundfläche 4 des Werkstücks 10 statt und die abgelösten Partikel des Werkstücks 10 werden durch die Seitenspalte zwischen den Seitenflächen 5 und der Mantelfläche 3 der Werkzeugelektrode 1 durch das strömende Dielektrikum abtransportiert und durch die Pfeile 16, 17 symbolisiert. Dadurch, dass im Bereich der Mantelfläche 3 die Werkzeugelektrode 1 elektrisch isoliert ist und sowohl maßhaltig, mit geringer Tiefe und hoher Stabilität ausgebildet ist, werden dort keine überschlagsgefährdeten Regionen gebildet. Die Ausnehmung 11 in dem Werkstück 10 kann hierdurch mit hoher Qualität, insbesondere einer hohen Maßhaltigkeit und Oberflächengüte sowie hoher Produktivität und geringer Fehleranfälligkeit erzeugt werden.

In Fig. 4 ist in einem Querschnitt eine Werkzeugelektrode 1 dargestellt, wobei in der linken Hälfte der Darstellung der Fig. 4 eine unbeschichtete Werkzeugelektrode gezeigt ist und in der rechten Hälfte eine Werkzeugelektrode, die mit einer zusätzlichen Schicht 18 als Schutzschicht bedeckt ist. Die Schicht 18 ist auf das Material der Werkzeugelektrode 1 aufgetragen und haftet an dieser mehr oder weniger gut. Beim Auftrag der Schicht 18 ist es schwierig, Hinterschneidungen an der Mantelfläche der Werkzeugelektrode gleichmäßig zu beschichten und zudem einen guten Verbund zur Elektrodenoberfläche herzustellen, um die Gefahr des Abplatzens der Schicht 18 zu minimieren.

Die Fig. 5 zeigt eine Werkzeugelektrode gemäß der Erfindung im Querschnitt, wobei im linken Bereich der Fig. 5 eine unbearbeitete Elektrode gezeigt ist, während im rechten Bereich der Fig. 5 die Situation nach der Reaktion mit einem geeigneten Reaktionspartner dargestellt ist, wenn sich an der Oberfläche der Werkzeugelektrode 1 durch eine chemische Reaktion mit dem Reaktionspartner eine Schicht, insbesondere eine Oxidschicht 6 ausgebildet hat. Das Volumen und die Maße der Elektrode ändern sich hierbei praktisch nicht, da lediglich Material im Bereich der Oberfläche der Elektrode durch Reaktion umgesetzt wird. Der Verbund der Schicht mit dem Körper der Werkzeugelektrode ist dabei sehr stabil.

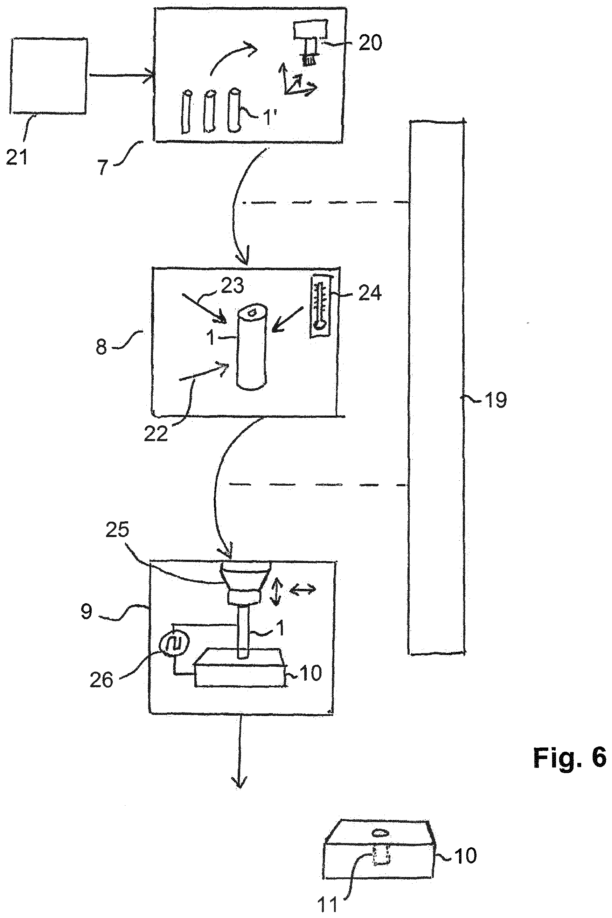

In der Fig. 6 ist eine Werkzeugmaschineneinrichtung gezeigt mit drei Stationen 7, 8, 9 und einem Handlingsystem 19. In der ersten Station 7 wird aus Rohlingen 1' in einer Frässtation 20 durch spanende Bearbeitung jeweils eine Werkzeugelektrode für die Funkenerosion hergestellt, deren Formen einer in ein Werkstück 10 einzubringenden Ausnehmung unter Berücksichtigung eines definierten Untermaßes im Wesentlichen entsprechen. Die Maße und die Form für die gewünschte Werkzeugelektrode werden über ein Eingabesystem 21 an die Station 7 übergeben.

Im Anschluss transportiert das Handlingsystem 19 die derart hergestellte Werkzeugelektrode 1 an eine zweite Station 8, in der an der Oberfläche der Werkzeugelektrode 1 eine Reaktionsschicht/Oxidschicht erzeugt wird. Dies geschieht durch Beaufschlagung der Werkzeugelektrode 1 mit einem Fluid, beispielsweise einem Gas, das durch die Pfeile 22, 23 dargestellt ist. Gleichzeitig kann eine Temperatursteuerung durch eine Heiz- oder Kühleinrichtung 24 durch Einstellung einer insbesondere erhöhten Temperatur für einen effizienten Ablauf der Reaktion sorgen.

Ist in der zweiten Station 8 die Elektrode 1 oberflächenbehandelt worden, so wird die oberflächenmodifizierte Elektrode durch das Handlingsystem 19 weiter an eine dritte Station 9 übergeben, wo die Elektrode 1 mittels einer Halterung und einer Ansteuerung 25 gegenüber einem Werkstück 10 bewegt wird, um in dem Werkstück 10 eine gewünschte Ausnehmung 11 zu erzeugen. Gleichzeitig wird die Werkzeugelektrode 1 an eine Spannungsversorgung 26 einer elektrischen Steuereinrichtung angeschlossen, mit der auch das Werkstück 10 verbunden ist. Durch eine Elektronik werden Strom und Spannung geregelt und durch die Achse 25 der Elektrode wird ein gewünschter Vorschub und die Positionierung der Elektrode 1 gegenüber dem Werkstück 10 sichergestellt. In der dritten Station 9 wird somit durch Funkenerosion mit der passend gestalteten Elektrode 1 eine gewünschte Ausnehmung 11 in dem Werkstück 10 erzeugt.

Im Folgenden werden Beispiele für die Herstellung von Werkzeugelektroden beschrieben.

In einem ersten Verfahren werden Kupferelektroden oxidiert. Hierzu findet zunächst eine Reinigung der Oberflächen mit Salzsäure und Isopropanol statt. Daraufhin findet eine Oxidation in einem Ofen bei einer Maximaltemperatur von 1100°C statt, wobei eine atmosphärische, sauerstoffhaltige Gasumgebung geschaffen ist. Danach wird die Elektrode abgeschreckt, beispielsweise in destilliertem Wasser oder an Umgebungsluft.

Nachfolgend kann ein Annealing stattfinden, wobei die Elektrode für eine gewisse Zeit erwärmt wird, um Schichtdefekte abzubauen. Die Erwärmung bleibt dabei deutlich unter der Temperatur der vorausgegangenen Oxidation. Nach dem Annealing finden ein erneutes Abschrecken und eine Grobreinigung statt.

Vergleichsmessungen des elektrischen Widerstandes an den Oberflächen der oben beschriebenen Elektrode zeigen, dass vor der Oxidation ein elektrischer Widerstand von 0,5 Ω und nach der Oxidation elektrische Widerstände im Bereich von einigen kΩ, beispielsweise zwischen 10 und 100kΩ vorliegen. Maßgeblich sind für die Ausbildung eines gewünschten elektrischen Widerstands die Oxidationstemperatur und -zeit. Diese kann über 15 Minuten bis zu 45 Minuten betragen.

Wiederholte Versuche ergeben, dass die Oxidation auch bei Temperaturen beispielsweise zwischen 700 °C und 900 °C durchgeführt werden kann.

Alternativ zu der genannten thermischen Oxidation einer Kupferelektrode kann auch eine chemische Oxidation, eine elektrochemische Oxidation (durch Galvanisierung), ein Sputtern mit einem Magnetron oder eine Laserdeposition gewählt werden, wobei jeweils maßgebend ist, dass die Umgebungsbedingungen und Reaktionsparameter derart gewählt werden, dass nicht lediglich eine Schicht auf der Oberfläche der Elektrode abgelagert wird, sondern die Partikel, die der Elektrode hinzugefügt werden, mit dem Material der Elektrode reagieren.

Ein erfindungsgemäßes Beispiel bezieht sich auf die Oxidation von Messingelektroden. Vorteilhaft ist bei der Ausbildung einer geeigneten Oxidschicht die Bildung von Kupfer(I)-Oxid, die Bildung von Kupfer(II)-Azetat (Grünspan) ist wegen der Gesundheits- und Umweltbelastung möglichst zu vermeiden. Mögliche Herstellungsverfahren für eine oxidierte Messingelektrode können die Einwirkung von Schwefelleber und destilliertem Wasser umfassen, die Einwirkung von Ammoniakwasser (25%ig) plus Kupferkarbonat oder die Einwirkung von Ammoniakdampf.

Nachfolgend wird das Verfahren unter Einwirkung von Salzwasser, Essig und Salz und destilliertem Wasser sowie Natron unter Erwärmung beschrieben.

Hierzu wird die Elektrode zunächst mit Isopropanol in einem Ultraschallbad gereinigt und danach geschliffen. Die Elektrode wird danach in einen offenporigen Schaumstoff oder eine Halterung gestochen und dieser wird mit der Elektrode in einem Behälter platziert. Eine Lösung mit Salzwasser, Essig und Salz sowie destilliertem Wasser und Natron wird bis zur Sättigung angereichert und in den Behälter gefüllt. Der Behälter wird dann auf etwa 130°C erwärmt, bis an der Oberfläche der Elektrode die gewünschte Reaktion unter Ausbildung einer Funktionsschicht/Reaktionsschicht stattgefunden hat. Es ergibt sich, dass die Verwendung von destilliertem Wasser und Natron in kurzer Zeit, beispielsweise nach wenigen Minuten, die Bildung einer Reaktionsschicht hervorruft. Der Widerstand dieser Schicht liegt im Mega-Ohm-Bereich und ist damit ausreichend für ein vorteilhaftes Verhalten der Elektrode bei der Funkenerosion. Die Oxidation unter Einwirkung von Salzwasser benötigt deutlich mehr Zeit (einige zehn Stunden) und führt nur teilweise zur Ausbildung von gewünschten elektrischen Widerstandswerten.

Die Nutzung von einer Lösung von Salz und Essig führt nicht sicher zum Erfolg, so dass der Nutzung von destilliertem Wasser mit Natron zur chemischen Reaktion/Oxidation der Vorzug gegeben wird. Die Anwendung von Natrondampf zur Oxidation zeigt somit gute Ergebnisse mit einer geringen Beeinträchtigung der Werkzeugmantelfläche beim Erosionsprozess. Der Elektrodenverschleiß im Erosionsprozess kann dabei ein wenig verschlechtert werden, jedoch kann sich die Erosionsgeschwindigkeit, d.h. die mögliche erreichbare Bearbeitungsgeschwindigkeit im Funkenerosionsprozess durch eine solche Beschichtung deutlich verbessern.

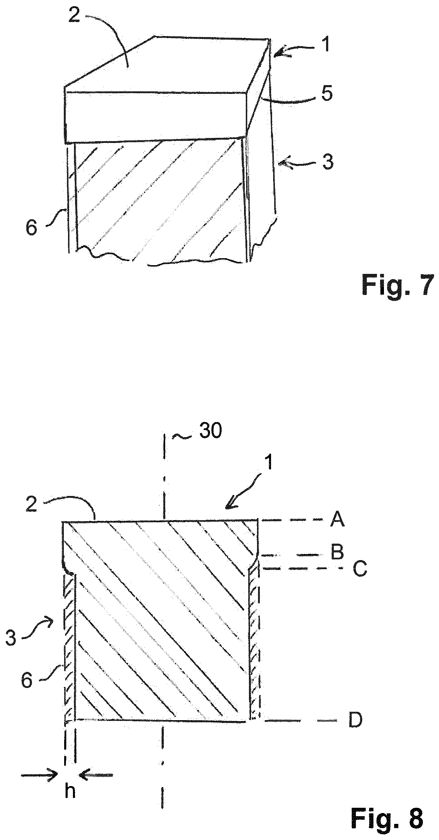

Die Fig. 7 zeigt in einer perspektivischen Ansicht eine Werkzeugelektrode 1 mit quadratischem Querschnitt, die in einigem Abstand von der Frontfläche 2 einen Rücksprung der Kontur aufweist. Die Schulter, die eine umlaufende Kante bildet, ist mit S bezeichnet. Von der Schulter S an weist die Werkzeugelektrode eine verringerte Dicke auf, wobei die Verringerung der Maße genau durch die Dicke der erzeugten Reaktionsschicht so ausgeglichen werden kann, dass die Außenmaße durchgehend konstant sind und der Rücksprung der Kontur überdeckt wird. Die Mantelflächen 3 werden damit im Ergebnis wieder glatt, so dass die Material-/Fluidströmung im Betrieb der Elektrode nicht gestört wird.

Die Fig. 8 zeigt eine im Querschnitt runde Werkzeugelektrode 1 in einem schematischen Längsschnitt. Im Bereich der Frontfläche 2 hat die Elektrode den größten Durchmesser des metallischen Kernmaterials. Entlang der Mantelfläche sind die Positionen A, B, C und D markiert, wobei jeder Buchstabe eine Höhe entlang der Mantelfläche 3 in Richtung der Längsachse 30 der Elektrode bezeichnet, wobei A die Höhe der Frontfläche selbst bezeichnet. Im Bereich zwischen A und B entlang der Mantelfläche weist die Elektrode denselben Durchmesser / dieselben Außenmaße auf wie unmittelbar an der Frontfläche. In diesem Bereich kann die Elektrode mit einer Reaktionsschicht beschichtet sein oder frei von der Beschichtung bleiben. Der Abstand zwischen A und B kann beispielsweise 1 - 2 mm betragen. Von der Höhe B an kann ein Rücksprung der Kontur vorgesehen sein, so dass ein Absatz an der Elektrode gebildet ist, der die Höhe h aufweist. h kann kleiner als 200 µm sein, jedoch > 10 µm. Die Dicke der Reaktionsschicht kann der Höhe h des Absatzes entsprechen, die Dicke der Reaktionsschicht kann jedoch auch größer sein als die Höhe h. Im Bereich zwischen der Höhe B und der Höhe C entlang der Mantelfläche kann eine Verrundung der Kante/Schulter des Rücksprungs der Kontur vorgesehen sein. Die Verrundung kann wenigstens teilweise oder auch vollständig von der Reaktionsschicht überdeckt sein.

In den meisten Fällen wird die oben beschriebene Oxidation/chem. Reaktion auf die gesamte Werkzeugelektrode angewendet. Die Wirkflächen, insbesondere die Frontfläche, werden üblicherweise entweder vor der Reaktion bedeckt/maskiert oder im Anschluss (z.B. durch Schleifen, Fräsen o.ä.) freigestellt.

## Patentansprüche

1. Verfahren zur Herstellung einer Werkzeugelektrode (1) für die funkenerosive Senkbearbeitung eines Werkstücks mit dem Ziel der Erzeugung einer Ausnehmung/Senkung (11) in dem Werkstück (10), welche eine Grundfläche (4) und Seitenflächen (5) aufweist,
wobei die Werkzeugelektrode (1) eine Frontfläche (2) aufweist, die der zu erodierenden Fläche oder der Grundfläche (4) des Werkstücks zugewandt ist, sowie eine oder mehrere Mantelflächen(3), die während des Senkungsprozesses den Seitenflächen (5) der im Werkstück (10) erodierten Ausnehmung/Senkung (11) zugewandt sind,
wobei eine oder mehrere Mantelflächen der Werkzeugelektrode (1) wenigstens teilweise mit einer Substanz in Kontakt gebracht werden, die mit dem Material der Werkzeugelektrode (1) unter Ausbildung einer elektrisch isolierenden Reaktionsschicht (6) reagiert, **dadurch gekennzeichnet, dass** die Werkzeugelektrode (1) aus Messing besteht und mit Salzwasser oder einer Lösung von NaCl in Essig, einer Lösung von Natron in destilliertem Wasser, einer Mischung von Schwefelleber und destilliertem Wasser, einer Lösung von Kupfercarbonat in Ammoniakwasser oder Ammoniakdampf in Kontakt gebracht wird.

2. Verfahren nach Anspruch 1, **dadurch gekennzeichnet, dass** die Reaktion bei Ausbildung einer Schichtdicke von weniger als 15 Mikrometer, insbesondere weniger als 10 Mikrometer, weiter insbesondere weniger als 5 Mikrometer, weiter insbesondere weniger als 1 Mikrometer abgebrochen wird, wobei insbesondere Hinterschneidungen und Ausnehmungen an der/den Mantelflächen (3) mit der Substanz in Kontakt gebracht werden, so dass alle Bereiche der Mantelflächen (3) eine gleichmäßige elektrisch isolierende Reaktionsschicht (6) ausbilden.

3. Verfahren nach Anspruch 1 oder 2, **dadurch gekennzeichnet, dass** während des Kontaktes der Mantelfläche(n) (3) mit der Substanz zur Reaktionsschichtbildung eine Temperatursteuerung, insbesondere eine Temperaturerhöhung, stattfindet.

4. Verfahren nach Anspruch 1, 2 oder 3, **dadurch gekennzeichnet, dass** die Substanz, mit der die Mantelfläche(n) (3) in Kontakt gebracht wird/werden, mit dem Material der Werkzeugelektrode (1) eine chemische Reaktion eingeht, bei der mit dem Material der Werkzeugelektrode eine elektrisch isolierende Reaktionsschicht gebildet wird.

5. Verfahren nach Anspruch 1,
**dadurch gekennzeichnet, dass** der Kontakt wenigstens zeitweise bei einer Temperatur oberhalb von 100 Grad Celsius, insbesondere oberhalb von 120 Grad Celsius stattfindet.

6. Verfahren nach einem der Ansprüche 4 oder 5, **dadurch gekennzeichnet, dass** die Werkzeugelektrode (1) nach der chemischen Reaktion, insbesondere einer Oxidation, und einer Abkühlung zum Abbau von Schichtdefekten erneut erwärmt wird.

7. Werkzeugelektrode (1) zum funkenerosiven Senken eines Werkstücks mit dem Ziel der Erzeugung einer Ausnehmung/Senkung an dem Werkstück, welche eine Grundfläche (4) und Seitenflächen (5) aufweist,
wobei die Werkzeugelektrode (1) eine Frontfläche (2) aufweist, die der zu erodierenden Fläche oder der Grundfläche (4) des Werkstücks zugewandt ist und eine oder mehrere Mantelflächen (3), die während des Senkungsprozesses den Seitenflächen (5) der im Werkstück erodierten Ausnehmung/Senkung (11) zugewandt sind,
wobei eine oder mehrere Mantelflächen (3) der Werkzeugelektrode an ihrer Oberfläche eine Schicht (6) aufweist/aufweisen, die durch Umsetzung des Materials der Werkzeugelektrode mit einem Reaktionspartner gebildet ist und die gegenüber dem Material der Werkzeugelektrode (1) einen höheren elektrischen Widerstand aufweist, **dadurch gekennzeichnet, dass** die Werkzeugelektrode aus Messing besteht und die Schicht (6) dadurch gebildet ist, dass die Werkzeugelektrode mit Salzwasser oder einer Lösung von NaCl in Essig, einer Lösung von Natron in destilliertem Wasser, einer Lösung von Kupfercarbonat in Ammoniakwasser oder Ammoniakdampf in Kontakt gebracht worden ist.

## Claims

1. Method for manufacturing a tool electrode (1) for the spark erosion countersinking of a workpiece with the aim of producing a recess/countersink (11) in the workpiece (10), which has a base surface (4) and side surfaces (5),
the tool electrode (1) having a front surface (2) which faces the surface for erosion or the base surface (4) of the workpiece, and one or more outward-facing surfaces (3) which face the side surfaces (5) of the recess/countersink (11) eroded in the workpiece (10) during the countersinking process,
one or more outward-facing surfaces of the tool electrode (1) at least being partially brought into contact with a substance which reacts with the material of the tool electrode (1) to form an electrically insulating reaction layer (6), **characterised in that** the tool electrode (1) is made of brass and is brought into contact with salt water or a solution of NaCl in vinegar, a solution of sodium carbonate in distilled water, a mixture of sulphuric acid and distilled water, a solution of copper carbonate in ammonia water, or ammonia vapour.

2. Method according to claim 1, **characterised in that** the reaction is interrupted by the formation of a layer thickness of less than 15 micrometres, in particular less than 10 micrometres, further in particular less than 5 micrometres, further in particular less than 1 micrometre, wherein in particular undercuts and recesses on the outward-facing surface(s) (3) are brought into contact with the substance, so that all areas of the outward-facing surfaces (3) form a uniform electrically insulating reaction layer (6).

3. Method according to claim 1 or 2, **characterised in that** while the outward-facing surface(s) (3) is in contact with the substance to form the reaction layer, temperature control, in particular a temperature increase, occurs.

4. Method according to claim 1, 2 or 3, **characterised in that** the substance with which the outward-facing surface(s) (3) is/are brought into contact undergoes a chemical reaction with the material of the tool electrode (1), in which an electrically insulating reaction layer is formed with the material of the tool electrode.

5. Method according to claim 1, **characterised in that** the contact temporarily occurs at least at a temperature higher than 100 degrees Celsius, in particular higher than 120 degrees Celsius.

6. Method according to any one of claims 4 or 5, **characterised in that** the tool electrode (1) post chemical reaction, in particular oxidation, and cooling is reheated to remove layer defects.

7. Tool electrode (1) for the spark erosion countersinking of a workpiece with the aim of producing a recess/countersink in the workpiece, which has a base surface (4) and side surfaces (5),
the tool electrode (1) having a front surface (2) which faces the surface for erosion or the base surface (4) of the workpiece, and one or more outward-facing surfaces (3) which face the side surfaces (5) of the recess/countersink (11) eroded in the workpiece during the countersinking process,
one or more outward-facing surfaces (3) of the tool electrode having a layer (6) on their surface formed by the reaction of the tool electrode's material with a reaction partner and having a higher electrical resistance than the material of the tool electrode (1), **characterised in that** the tool electrode is made of brass and the layer (6) is formed by bringing the tool electrode into contact with salt water or a solution of NaCl in vinegar, a solution of sodium bicarbonate in distilled water, a solution of copper carbonate in ammonia water or ammonia vapour.

## Revendications

1. Procédé de fabrication d'une électrode-outil (1) destinée au fraisage par électro-érosion d'une pièce à usiner, dans le but de produire un évidement/fraisage (11) dans la pièce d'œuvre (10), laquelle présente une surface de base (4) et des surfaces latérales (5),
dans lequel l'électrode-outil (1) présente une surface frontale (2) faisant face à la surface à éroder ou à la surface de base (4) de la pièce d'œuvre, et une ou plusieurs surface(s) extérieure(s) (3) faisant face pendant l'opération de fraisage aux surfaces latérales (5) de l'évidement/fraisage (11) érodé dans la pièce d'œuvre (10),
dans lequel une ou plusieurs surface(s) extérieure(s) de l'électrode-outil (1) est/sont au moins partiellement mise(s) en contact avec une substance qui réagit avec le matériau de l'électrode-outil (1) pour former une couche de réaction (6) électriquement isolante, **caractérisé en ce que** l'électrode-outil (1) est en laiton et est mise en contact avec de l'eau salée ou une solution de NaCl dans du vinaigre, une solution de bicarbonate de sodium dans de l'eau distillée, un mélange de sulfure de potassium et d'eau distillée, une solution de carbonate de cuivre dans de l'ammoniaque ou de la vapeur d'ammoniac.

2. Procédé selon la revendication 1, **caractérisé en ce que** la réaction est terminée lorsqu'une épaisseur de couche inférieure à 15 micromètres, en particulier inférieure à 10 micromètres, en particulier inférieure à 5 micromètres, en particulier inférieure à 1 micromètre, est formée, des contre-dépouilles et des évidements présents au niveau de la ou des surface(s) extérieure(s) (3) étant en particulier mis en contact avec la substance, de sorte que toutes les régions de la ou des surface(s) extérieure(s) (3) forment une couche de réaction (6) électriquement isolante uniforme.

3. Procédé selon la revendication 1 ou 2, **caractérisé en ce qu'**une régulation de température, en particulier une augmentation de température, se produit lors du contact de la ou des surface(s) extérieure(s) (3) avec la substance permettant de former la couche de réaction.

4. Procédé selon la revendication 1, 2 ou 3, **caractérisé en ce que** la substance, avec laquelle la ou les surface(s) extérieures (3) est/sont mis(es) en contact, entre en réaction chimique avec le matériau de l'électrode-outil (1), une couche de réaction électriquement isolante étant formée grâce au matériau de l'électrode-outil.

5. Procédé selon la revendication 1, **caractérisé en ce que** le contact a lieu au moins temporairement à une température supérieure à 100 degrés Celsius, en particulier supérieure à 120 degrés Celsius.

6. Procédé selon la revendication 4 ou 5, **caractérisé en ce que** l'électrode-outil (1) est à nouveau chauffée après la réaction chimique, en particulier après une oxydation, et après un refroidissement permettant d'éliminer des défauts de couche.

7. Électrode-outil (1) permettant de fraiser par électro-érosion une pièce d'œuvre dans le but de produire un évidement/fraisage au niveau de la pièce d'œuvre, laquelle présente une surface de base (4) et des surfaces latérales (5),
dans lequel l'électrode-outil (1) présente une surface frontale (2) faisant face à la surface à éroder ou à la surface de base (4) de la pièce d'œuvre, et une ou plusieurs surface(s) extérieure(s) (3) faisant face pendant l'opération de fraisage aux surfaces latérales (5) de l'évidement/fraisage (11) érodé dans la pièce d'œuvre,
dans laquelle une ou plusieurs surface(s) extérieure(s) (3) de l'électrode-outil présente(nt) sur leur surface une couche (6) qui est formée en faisant réagir le matériau de l'électrode-outil avec un partenaire de réaction et qui présente une résistance électrique supérieure à celle du matériau de l'électrode-outil (1), **caractérisée en ce que** l'électrode-outil est en laiton et la couche (6) est formée en mettant l'électrode-outil en contact avec de l'eau salée ou une solution de NaCl dans du vinaigre, une solution de bicarbonate de sodium dans de l'eau distillée, une solution de carbonate de cuivre dans de l'ammoniaque ou de la vapeur d'ammoniac.
